# EUROPEAN PATENT SPECIFICATION

(11) **EP 0 774 425 B1**
(45) Date of publication and mention of the grant of the patent: **03.04.2002**
(21) Application number: 96203086.2
(22) Date of filing: 05.11.1996
(51) Int. Cl.: B65F 3/00, B60K 28/10, B60T 7/22

(54) **Vehicle, in particular a refuse collection vehicle, provided with a safety system**
Fahrzeug,insbesondere Müllsammelfahrzeug,ausgerüstet mit Sicherheitsvorrichtung
Véhicule, notamment véhicule de ramassage d'ordures, muni d'un système de sécurité

(30) Priority: 17.11.1995 NL 1001681
(43) Date of publication of application: 21.05.1997
(73) Proprietor: Geesink B.V., 8305 AG Emmeloord (NL)
(72) Inventor: Elbrink, Heinrich Johannes, 8304 JL Emmeloord (NL)
(74) Representative: Brookhuis, Hendrik Jan Arnold

(56) References cited:
- WO-A-90/09293
- DE-A- 3 729 107
- DE-A- 3 918 971
- DE-A- 4 121 720
- US-A- 4 074 787

## Description

The present invention relates to a vehicle, in particular a refuse collection vehicle, having at least one footboard, and a safety system which at least prevents reversing of the vehicle when a person is present on the footboard.

Various safety systems aimed at preventing persons from being injured by a refuse collection vehicle reversing are known from the prior art. A number of known safety systems also provide a limitation of the speed at which the vehicle can be driven in the forward direction when a person is standing on a footboard of the vehicle. For example, in DE 37 29 107, on which the preamble of claim 1 is based, it is disclosed that the engine of the vehicle is stopped automatically if a person is standing on a footboard and an attempt is being made to reverse the vehicle.

DE 39 18 971 discloses a situation where the engine speed of the vehicle or the forward speed of the vehicle is limited when a person is standing on the footboard.

The safety system disclosed in DE 37 29 107 has several disadvantages. For instance, stopping the engine does not guarantee in every case that the vehicle will not be able to travel in reverse. If the vehicle is standing on an incline and the engine is stopped by the safety system, it is possible for the vehicle to roll back if the driver depresses the clutch pedal or if the gearbox is in neutral. In the case of vehicles with an automatic gearbox, where a hydraulic transmission is present between the engine and the gearbox, it is not possible to slow down or hold the vehicle in place by stopping the engine.

Another disadvantage of the known system is that, when the engine has been stopped by the system, the vehicle can no longer be driven until the engine has been restarted. Since starting takes some time, this can lead to unsafe traffic situations. Another disadvantage of this known system is that when a person has stepped off the footboard the safety system is no longer operational, with the result that the driver, who cannot see the person who has stepped off behind the vehicle, may reverse, and the person may be injured.

The object of the present invention is to eliminate the abovementioned problems and to provide an improved safety system for such a vehicle with one or more footboards.

This object is achieved by a vehicle according to claim 1. The vehicle according to the invention is held reliably in place when the safety system is switched on, if necessary after it has first been slowed down automatically to a stop by a brake system of the vehicle acting upon one or more vehicle wheels. Of course, the brake system connected to the safety system is preferably a brake system which is already present as a standard feature, as in the case of most vehicles.

In an advantageous embodiment according to claim 2, in a service brake system operated by a pressure medium, provision is made for the brake pressure produced by the safety system in the service brake of the vehicle to be lower, preferably considerably lower, than the maximum brake pressure. The latter brake pressure is determined by the maximum brake capacity of the vehicle laid down by law. If the safety system produces this maximum pressure in the service brake system, there is a chance of dangerous, and thus undesirable, situations. In this context, reference is made to the publication DE 41 21 720, in which the position of the footboard serves as a signal for a safety system which is actively connected to the service brake system of the vehicle. This known safety system not only has the disadvantage that swinging back the footboard - which is generally very dirty and is placed close to ground level - is unpleasant work, but it is also conceivable that the driver may have changed into reverse gear and is releasing the clutch in a controlled manner, while at the same moment someone is swinging up the footboard. In that case the service brake is released immediately, and the vehicle suddenly moves backwards, which is very dangerous.

The safety system known from DE 41 21 720 also has the disadvantage that this safety system produces the maximum brake pressure in the service brake system of the vehicle. This means that it is possible, for example due to a simple fault in the sensor for detecting the position of the footboard, or due to the footboard swinging down spontaneously, that while the vehicle is being driven it may suddenly be braked with full force and come abruptly to a standstill. This is a dangerous and undesirable situation, in particular at high speeds. The present invention provides for only a reduced brake pressure to be produced in the service brake system, so that this risk is effectively prevented. In the case of the safety system according to DE 41 21 720 the invention can be achieved by accommodating a pressure-reducing valve in the line to the service brake cylinders of the vehicle. Said reducing valve reduces the service brake pressure the moment the safety system of the vehicle goes into operation. Reducing the service brake pressure ensures that the dangerous situations described above are prevented. However, it is a disadvantage that at the same moment, for example in an emergency, despite full depression of the brake pedal, maximum braking is no longer possible.

Another disadvantage of the system according to DE 41 21 720 is that, if the footboard is sabotaged, reversing with the vehicle is not possible, which is inadmissible by law.

The present invention also makes provision to ensure that, when the vehicle is being driven above a certain speed limit, the safety system does not switch on a brake system of the vehicle which is actively connected thereto.

In a preferred embodiment of the invention, it is not the service brake system of the vehicle, but the parking brake system of the vehicle, which is used as a safety mechanism to prevent, inter alia, reversing, as described in claim 4. The main advantage of using the parking brake system, which is a standard feature in most commercial vehicles, is that the integrity of the service brake system of the vehicle is not adversely affected in any way. Moreover, the braking action of a parking brake system is considerably less than that of the service brake, with the result that the dangerous situations described above are ruled out from the outset. Many known parking brake systems act by means of a spring-loaded brake element which is switched on by the evacuation of air from the parking brake cylinder. Of course, the braking action of a parking brake system of a vehicle is sufficient to hold the vehicle reliably in place, even on inclines.

In another advantageous embodiment of the invention, an actuator, which acts upon the brake pedal mechanism or the parking brake operating mechanism, is present. Further advantageous embodiments of the invention are described in the claims and the description which follows with reference to the drawing, in which:
Fig. 1 shows a side view of a refuse collection vehicle according to the present invention;
Fig. 2 shows a rear view of the refuse collection vehicle of Fig. 1;
Fig. 3 shows a part of a schematic diagram of an exemplary embodiment of a pneumatic brake system of a vehicle according to the invention;
Fig. 4 shows a schematic diagram of an exemplary embodiment of the electrical system for controlling the brake system shown in Fig. 3.

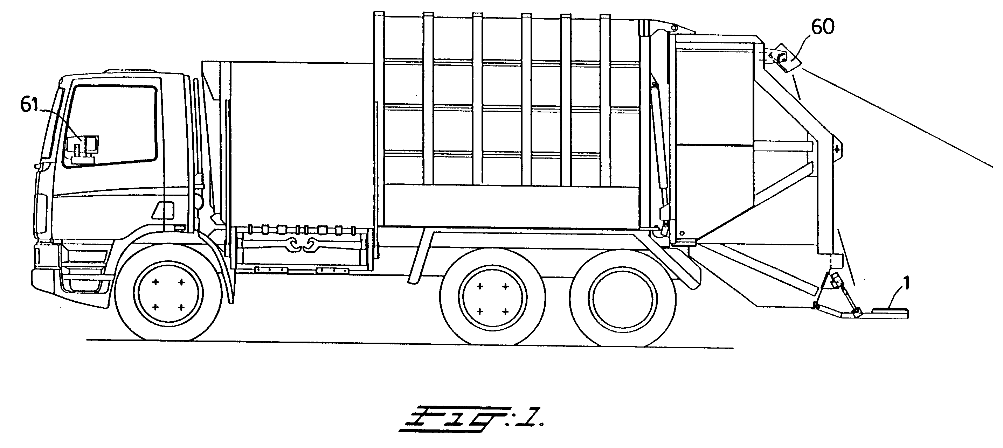

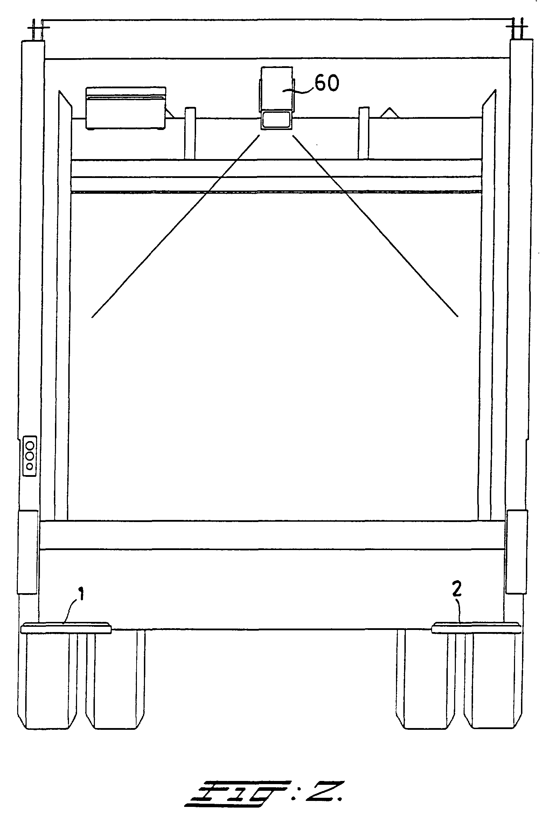

Figures 1 and 2 show a refuse collection vehicle according to the present invention. The refuse collection vehicle shown has a chassis with a container for refuse, and two footboards 1, 2 at the rear of the vehicle. As is generally known, the footboards 1, 2 are intended as a standing place for persons collecting the refuse.

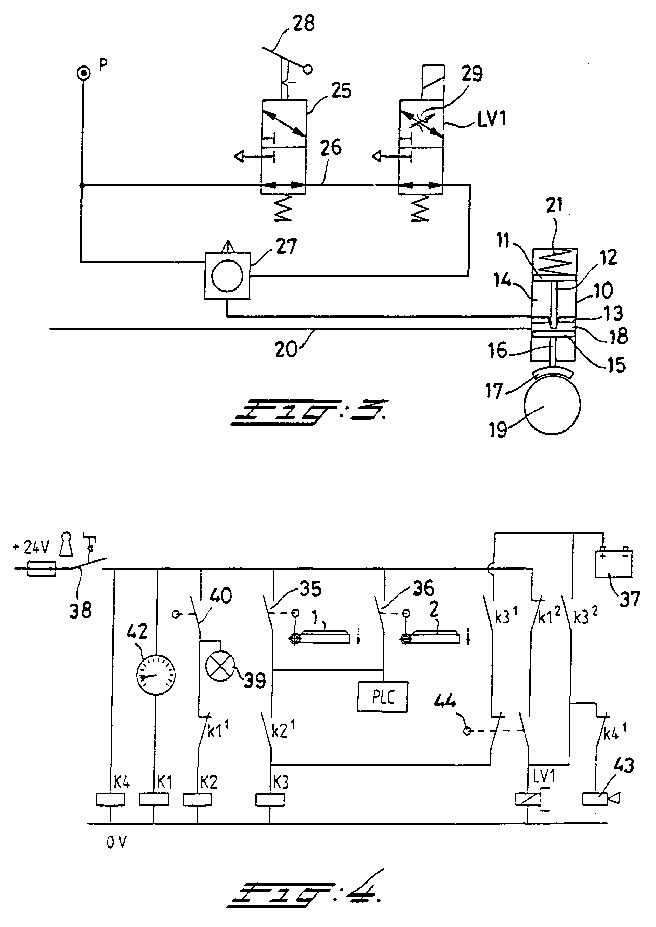

Figure 3 shows a conventional pneumatically operated brake system of a commercial vehicle, in particular the parking brake system thereof, provided with additional measures for achieving the invention.

The brake system comprises one or more combined service and parking brake cylinders 10 of the generally known type. The cylinder 10 shown has a parking brake part with a piston 11 and a piston rod 12 immovably connected thereto. The piston rod 12 projects through a seal in an opening in a partition wall 13 of the cylinder 10. A first working chamber 14 of the cylinder 10 is bounded by the piston 11 and the partition wall 13. At the other side of the partition wall 13 there is a second piston 15 and a piston rod 16 immovably connected thereto, at the free end of which piston rod a brake shoe 17 is fitted. A second working chamber 18 of the cylinder 10 is bounded by the second piston 15 and the partition wall 13. The brake shoe 17 can interact with a drum 19, or another part, which is connected to one or more of the wheels of the vehicle, for example the refuse collection vehicle shown in Figures 1 and 2.

Communicating with the second working chamber 18 of the cylinder 10 is a pressure medium line 20, which is connected, in a manner not shown, to the service brake system of the vehicle. Putting a pressure medium, in this case air, in the working chamber 18 under pressure by way of the line 20, causes the brake shoe 17 to be pressed forcefully against the drum 19, and brakes the vehicle. The service brake system thus works by placing the pressure medium in the second working chamber 18 under pressure.

The parking brake system of the vehicle will be in operation if in the first working chamber 14 of the cylinder 10 filled with a pressure medium, in this case air, insufficient pressure prevails to hold the piston 11 in its position shown in Figure 3 against the action of spring 21. Evacuating the air from the first working chamber 14 will cause the spring 21 to force the piston 11 outwards, and the piston rod 12 will go against the second piston 15 and drive it along. In this way, the brake shoe 17 is pressed against the drum 19 by the force of the spring 21. The force of the spring 21 is sufficient to brake the vehicle gradually and hold it in place.

For the operation of the parking brake, a pneumatic 3/2-valve with spring return mechanism 25 is usually present in a control line 26 to a relay valve 27. The valve 25 is operated by the driver of the vehicle by way of a brake handle 28 present in the driver's cab. When the driver operates the brake handle 28, the control pressure on the relay valve 27 drops off, and said relay valve 27 connects the working chamber 14 of the cylinder 10 to the environment. As a result of this, the parking brake action is switched on.

According to the present invention, an additional valve LV1 is placed in the control line 26, in particular between the valve 25 and the relay valve 27. When not actuated, the valve LV1 forms a through-connection in the control line 26 and, when actuated, said valve LV1 connects the control connection of the relay valve 27 to the environment, with the result that the parking brake action is switched on.

In the example shown, the additional valve LV1 is an electrically excited 3/2-valve with spring return mechanism. For the gradual going into operation of the parking brake system, a throttle 29 is accommodated in the connection to the environment.

Figure 4 shows a way in which the electrical operation of the valve LV1 can be achieved. Figure 4 shows two footboards 1, 2 present at the rear side of a refuse collection vehicle, at the left and right side of the vehicle respectively. For each footboard 1, 2, a corresponding switch 35, 36 respectively is provided, which switch closes if a person is standing on the footboard concerned. The switches can be designed to close if a load exceeding a predetermined value is exerted on the footboard concerned. The switches could also be in the form of infrared sensors, so that the presence of a person on the footboard is detected.

The electrical diagram also shows a battery 37 and a main switch 38 which is operated by an ignition lock. When breaker contact k2¹ is closed, a relay K3 can be excited by means of one of the footboard switches 35, 36 and the contact k2¹. This causes the valve LV1 to be excited by way of contact k3², and the parking brake system of the vehicle is switched on.

The contact k2¹ is closed when a relay K2 is excited. Said relay K2 is connected to the reversing light 39 of the vehicle, which is switched on by means of a reversing switch 40, which is generally present in the gearbox.

The footboard switches 35, 36 are preferably connected to a Programmable Logic Controller (PLC) which controls various functions, such as the crusher mechanism of the refuse collection vehicle. The PLC monitors the proper functioning of the switches 35 and 36 and, when a fault is found in said switches 35 and 36, switches off important functions of the vehicle, so that repair of the faulty switch is unavoidable. However, it is normally still possible to drive the vehicle when there is a faulty switch. The monitoring of the switches 35 and 36 by way of the PLC also means that deliberate sabotage of these switches is prevented.

In order to rule out adverse consequences in the event of a fault, a breaker contact k1¹ is accommodated in the supply line of the relay K2. The relay K1 is also connected by way of an amplifier (not shown) to tachograph 42 of the vehicle. When the speed of the vehicle exceeds a predetermined set speed, relay K1 is excited, and the supply of the relay K2 is consequently interrupted by way of the contact k1¹. The predetermined speed is preferably 20 kilometers per hour.

If the reversing switch 40 is faulty, or if reverse gear is selected accidentally during forward travel, and a person is standing on a footboard of the vehicle at that moment, or a footboard switch develops a fault at that moment, the parking brake system of the vehicle goes into operation only at a speed which lies below the predetermined speed. The dangerous situations described above are avoided in this way.

In fact, the parking brake system is now switched on by the safety system only if the following conditions are simultaneously met:
- the vehicle speed is lower than the predetermined set speed;
- the reversing light is on;
- a person is present on a footboard.

The relay K3 preferably keeps itself excited by way of a make contact k3¹. This prevents the occurrence of the dangerous situation in which, when the parking brake system has been switched on automatically and the driver is trying to reverse, a person steps off a footboard and the vehicle suddenly moves backwards. The same type of situation, which is now prevented, is when the vehicle is standing on an incline and the driver has not deliberately switched on the parking brake system himself and gets out of the cab.

Both the supply line of the relay K3 by way of contact k3¹ and the supply line of the valve LV1 by way of contact k3² are preferably directly connected to the battery 37. This contrasts with the remainder of the electrical circuit, which is switched by way of the ignition lock 38. If the parking brake system has been switched on by the safety system and the driver switches off the ignition and, for example, gets out of the cab, this measure ensures that the parking brake system stays switched on, even if the driver has forgotten to switch on the parking brake system himself.

If the battery 37 runs down, the parking brake system of the vehicle could still be switched off. Relay K4 is incorporated in order to ensure that this does not happen. Parallel to the supply line of the valve LV1, a signalling function is now produced by means of a breaker contact k4¹. If the parking brake system of the vehicle has been switched on by the safety system and the driver interrupts the main switch 18 by means of the ignition lock, he is then warned by the, for example, acoustic signalling device 43.

If the parking brake system of the vehicle has been switched on by the safety system, the driver must, preferably deliberately, operate a reset switch 44 in order to switch off the parking brake system again. Said switch 44 is situated within the driver's reach in the driver's cab of the vehicle. The breaker contact of the switch 44 then interrupts the hold supply line of the relay K3.

The reset switch 44 is preferably protected against sabotage by also being provided with a make contact. If the switch 44 is sabotaged by being fixed in some way or other in the actuated position, the parking brake system of the vehicle is switched on automatically when the main switch 38 of the vehicle is switched on, and it is impossible to drive off. This is because the valve LV1 is then excited by means of the breaker contact k1² and the make contact of the reset switch 44.

If the reset switch 44 is operated accidentally during travel, at a speed above the set speed limit the parking brake system cannot be switched on, owing to the fact that contact k1² has been provided. Dangerous situations are prevented in this way.

The relay K1 can be checked to ensure that it is functioning correctly by travelling at a speed slightly above the predetermined speed and then operating the reset switch 44. If it is functioning correctly, the relay K1 is excited, and the breaker contact k1¹ is consequently interrupted, so that the valve LV1 is not excited by means of the make contact of the reset switch 44. If the relay K1 is not functioning correctly, in that case the parking brake system will be switched on, which is not dangerous, owing to the low speed. If the speed is then reduced to below the predetermined speed, the parking brake system will switch on, if the relay K1 is functioning correctly, and if the reset switch 44 is operated.

The functioning of the reversing light of the vehicle is simple to check visually.

A brake pedal may be used which is situated in a driver's cab of a refuse collection vehicle, and which is fitted in such a way that it pivots about a shaft in the cab. A rod of the brake pedal mechanism transmits the position of the brake pedal to a device which regulates the service brake action depending on the position of the brake pedal. Such an assembly is present in virtually all motor vehicles.

According to the present invention, an actuator, in this example an air cylinder, is also present, which actuator is connected by way of a pin-and-slot connection to an extension of the brake pedal and can move the brake pedal downwards over a certain distance. This occurs here when the pressure prevailing in the working chamber of the cylinder is sufficient to overcome the return force of a spring. The braking force produced by means of the service brake system is sufficient for holding the vehicle in place or only gradually slowing it down. Whether or not the working chamber is brought to pressure depends on a signal which is supplied by means not shown, and which indicates whether or not a person is standing on a footboard of the vehicle. When the brake pedal has been moved by the cylinder, the driver of the vehicle can depress the brake pedal further unimpeded, so that he can brake harder than the automatic safety system.

A similar solution with an actuator can be provided for operating the parking brake system. The actuator will then act upon the parking brake operating mechanism, for example on the brake handle in the cab.

Safety can be improved yet further by using a camera 60 fitted at the rear of the vehicle (see Figures 1 and 2). The camera 60 is connected to a screen 61, which is disposed in the driver's cab of the vehicle. This gives the driver a view of the area behind the vehicle.

In many known refuse collection vehicles, apart from the screen for displaying the camera pictures, there is also an electronic display on which messages and/or warnings are displayed. The known vehicles generally also have a Programmable Logic Controller (PLC) or similar device for controlling various functions of the vehicle, but the PLC is also used for controlling the display, so that the correct message appears on the display at the correct moment.

This known arrangement of a screen for the camera pictures and a display for messages and/or warnings has the disadvantage that when the driver turns his attention to the screen, he does not see messages and/or warnings appearing on the display, or he sees them only when it is too late. This undesirable situation can be prevented according to the invention by displaying the messages and/or warnings on the screen, preferably at the same time as the camera pictures, so that the separate display can be discarded.

An acoustic signalling device is preferably present in the driver's cab, which device draws the attention of the driver by means of an acoustic signal when a warning is being given.

It is also preferable for a screen which has been switched off to be switched on automatically when a message and/or warning is to be displayed.

The brightness of the display of the camera pictures on the screen is preferably reduced during the display of a message/warning on the screen. This increases the clarity of the messages and/or warnings.

For example, the screen is provided with a programmable memory in which the possible messages and/or warnings to be displayed on the screen can be stored, for instance each under a unique serial number. If the PLC then finds a situation in which it is necessary to make a particular message or warning appear on the screen, the PLC delivers a signal containing the serial number to the screen, which then displays the correct message and/or warning.

The arrangement described above leads to important messages and/or warnings being noticed sooner by the driver of the vehicle, and it is also much less tiring for the driver to keep an eye on all operating signals of the vehicle. It will be clear that the combined display of camera pictures and messages on a single screen can also be achieved as a separate measure, i.e separately from what has been described above with regard to the safety system by way of the brakes of the vehicle, and leads to increased safety.

In an advantageous embodiment, the vehicle according to the present invention is also provided with an electronic memory for storing data relating to the vehicle, such as data concerning the use of the vehicle (including operating hours), and data concerning the occurrence of faults in the vehicle. Connecting the memory to the screen ensures that the stored data can be displayed by way of the screen, for example for the benefit of the maintenance engineer. The data can also be called up by connecting the memory to external hardware.

The screen in the driver's cab of the vehicle can also be used for achieving greater safety. For safety reasons, it is in fact not admissible, if a person is standing on the footboard, to drive forward faster than at a safe speed of, for example, 20 kph. Exceeding this safe speed can be prevented by means of known solutions, by actually limiting the speed of the vehicle to this safe speed. A disadvantage of this is that limiting the vehicle speed to a maximum speed means that the driver is restricted in his possibilities for reacting to emergencies, where a higher vehicle speed is sometimes necessary. According to the invention, an alternative to actual limiting of the vehicle speed is for a speed exceeding the envisaged maximum speed to be possible when a person is standing on a footboard, but in that case for a warning to be displayed on the screen, drawing the driver's attention to the fact that the maximum speed is being exceeded, so that the driver can reduce the speed.

In a further embodiment such exceeding of the maximum speed can be stored in an electronic memory, so that the driving behaviour of the driver can be assessed in this way. Combined with the abovementioned display on the screen of a warning that the maximum speed is being exceeded, it is advantageous for the exceeding of the maximum speed not to be stored in the memory until some time after the warning first appears on the screen. In this way the driver still has enough time to correct the speed before the exceeding of the maximum speed has been stored. The warning could flicker on the screen in the first instance, and only be displayed continuously when the exceeding of the maximum speed has been recorded.

## Claims

1. Vehicle, in particular a refuse collection vehicle, having at least one footboard, and a safety system which prevents reversing of the vehicle when a person is present on the footboard and an attempt is made to reverse the vehicle, **characterized in that** the safety system is actively connected to a brake system acting upon one or more of the vehicle wheels, such that said brake system is switched on when a person is present on the footboard and an attempt is made to reverse the vehicle.

2. Vehicle according to claim 1, in which the safety system comprises means which prevent the brake system connected to the safety system from being switched on by the safety system when the actual speed of the vehicle is higher than a predetermined speed.

3. Vehicle according to claim 1 or 2, in which the vehicle has a service brake system, comprising a brake pedal which is operable by the driver of the vehicle and a device for providing a braking action depending on the position of the brake pedal, while the safety system produces a braking action which is less than the maximum braking action to be produced with the brake pedal.

4. Vehicle according to claim 3, in which the safety system comprises an actuator which engages upon the brake pedal mechanism.

5. Vehicle according to claim 1 or 2, in which the vehicle has a parking brake system, and the safety system is actively connected to the parking brake system of the vehicle, such that said parking brake system is switched on when a person is present on the footboard.

6. Vehicle according to claim 5, in which the safety system comprises an actuator which engages upon the parking brake handle mechanism.

7. Vehicle according to claim 5, in which the vehicle has a parking brake system with one or more parking brake cylinders (10), in which a spring (21) produces the parking brake action and a pressure medium under pressure can keep the spring (21) compressed, comprising a parking brake operating element (28), which is operable by the driver, and a device (25, LV1) for draining away the pressure medium from the at least one parking brake cylinder when the parking brake operating element is operated or the safety system switches on.

8. Vehicle according to one or more of the preceding claims, in which the vehicle comprises a speed sensor (42), and the safety system is actively connected to the speed sensor, and also comprises means for setting a predetermined speed, in which the safety system does not switch on the brake system actively connected thereto if the vehicle speed detected by the speed sensor is higher than the set speed.

9. Vehicle according to one or more of the preceding claims, in which the safety system has a reset switch (44) which is operable by a person, and also has means for keeping in operation a brake system of the vehicle switched on by the safety system until the reset switch is operated.

10. Vehicle according to claim 9, in which the reset switch (44) is disposed in the driver's cab of the vehicle.

11. Vehicle according to one or more of the preceding claims, having a camera (60), and display means comprising a screen (61) disposed in the driver's cab of the vehicle, for displaying pictures taken by the camera, **characterized in that** the display means are designed for displaying on the screen messages and/or warnings, preferably simultaneously with the pictures from the camera.

12. Vehicle according to claim 11, in which the display means are connected to an acoustic signalling device disposed in the driver's cab of the vehicle.

13. Vehicle according to claim 11 or 12, in which the display means reduce the light intensity of the picture taken by the camera and displayed on the screen when a message is being displayed on the screen.

14. Vehicle according to one or more of the preceding claims 11-13, in which the vehicle is provided with an electronic memory (PLC) for storing data concerning the vehicle, in particular data concerning the use of and

## Patentansprüche

1. Fahrzeug, insbesondere ein Müllabfuhrfahrzeug, das wenigstens ein Trittbrett und ein Sicherheitssystem aufweist, das das Rückwärtsfahren des Fahrzeugs verhindert, wenn sich eine Person auf dem Trittbrett befindet und versucht wird, das Fahrzeug rückwärts zu fahren, **dadurch gekennzeichnet, dass** das Sicherheitssystem aktiv so mit einem Bremssystem verbunden ist, das auf eines oder mehrere der Fahrzeugräder einwirkt, dass das Bremssystem angeschaltet wird, wenn sich eine Person auf dem Trittbrett befindet und versucht wird, das Fahrzeug rückwärts zu fahren.

2. Fahrzeug nach Anspruch 1, wobei das Sicherheitssystem eine Einrichtung umfasst, die verhindert, dass das mit dem Sicherheitssystem verbundene Bremssystem durch das Sicherheitssystem angeschaltet wird, wenn die Ist-Geschwindigkeit des Fahrzeugs höher ist als eine vorgegebene Geschwindigkeit.

3. Fahrzeug nach Anspruch 1 oder 2, wobei das Fahrzeug ein Betriebsbremssystem aufweist, das ein Bremspedal, das von dem Fahrer des Fahrzeugs betätigt werden kann, und eine Vorrichtung umfasst, die je nach der Position des Bremspedals eine Bremswirkung erzeugt, wobei das Sicherheitssystem eine Bremswirkung erzeugt, die geringer ist als die maximale Bremswirkung, die mit dem Bremspedal erzeugt wird.

4. Fahrzeug nach Anspruch 3, wobei das Sicherheitssystem ein Betätigungselement umfasst, das mit dem Bremspedalmechanismus in Eingriff kommt.

5. Fahrzeug nach Anspruch 1 oder 2, wobei das Fahrzeug ein Haltebremssystem hat und das Sicherheitssystem aktiv so mit dem Haltebremssystem des Fahrzeugs verbunden ist, dass das Haltebremssystem angeschaltet wird, wenn sich eine Person auf dem Trittbrett befindet.

6. Fahrzeug nach Anspruch 5, wobei das Sicherheitssystem ein Betätigungselement umfasst, das mit dem Haftebrems-Griffmechanismus in Eingriff ist.

7. Fahrzeug nach Anspruch 5, wobei das Fahrzeug ein Haltebremssystem mit einem oder mehreren Haltebremszylindern (10) aufweist, wobei eine Feder (21) die Haltebremswirkung erzeugt und ein unter Druck stehendes Druckmedium die Feder (21) zusammengedrückt halten kann, das ein Haltebrems-Betätigungselement (28), das von dem Fahrer betätigt werden kann, und eine Vorrichtung (25, LV1) umfasst, die das Druckmedium aus dem wenigstens einen Haltebremszylinder ablässt, wenn das Haltebrems-Betätigungselement betätigt wird oder sich das Sicherheitssystem anschaltet.

8. Fahrzeug nach einem oder mehreren der vorangehenden Ansprüche, wobei das Fahrzeug einen Geschwindigkeitssensor (42) umfasst und das Sicherheitssystem aktiv mit dem Geschwindigkeitssensor verbunden ist, und des Weiteren eine Einrichtung zum Einstellen einer vorgegebenen Geschwindigkeit umfasst, wobei das Sicherheitssystem das aktiv damit verbundene Bremssystem nicht anschaltet, wenn die von dem Geschwindigkeitssensor erfasste Fahrzeuggeschwindigkeit höher ist als die eingestellte Geschwindigkeit.

9. Fahrzeug nach einem oder mehreren der vorangehenden Ansprüche, wobei das Sicherheitssystem einen Rücksetzschalter (44) aufweist, der von einer Person betätigt werden kann, und darüber hinaus eine Einrichtung aufweist, die ein von dem Sicherheitssystem angeschaltetes Bremssystem des Fahrzeugs in Funktion hält, bis der Rücksetzschalter betätigt wird.

10. Fahrzeug nach Anspruch 9, wobei der Rücksetzschalter (44) im Fahrerhaus des Fahrzeugs angeordnet ist.

11. Fahrzeug nach einem oder mehreren der vorangehenden Ansprüche, das eine Kamera (60) und eine Anzeigeeinrichtung, die einen Bildschirm (61) umfasst, der in dem Fahrerhaus des Fahrzeugs angeordnet ist, um mit der Kamera aufgenommene Bilder anzuzeigen, aufweist, **dadurch gekennzeichnet, dass** die Anzeigeeinrichtung dazu dient, auf dem Bildschirm Meldungen und/oder Warnungen anzuzeigen, und zwar vorzugsweise gleichzeitig mit den Bildern von der Kamera.

12. Fahrzeug nach Anspruch 11, wobei die Anzeigeeinrichtung mit einer akustischen Signalvorrichtung verbunden ist, die in dem Fahrerhaus des Fahrzeugs angeordnet ist.

13. Fahrzeug nach Anspruch 11 oder 12, wobei die Anzeigeeinrichtung die Lichtintensität des von der Kamera aufgenommenen und auf dem Bildschirm angezeigten Bildes verringert, wenn eine Meldung auf dem Bildschirm angezeigt wird.

14. Fahrzeug nach einem oder mehreren der vorangehenden Ansprüche 11-13, wobei das Fahrzeug mit einem elektronischen Speicher (PLC) versehen ist, der Daten bezüglich des Fahrzeugs speichert, und zwar insbesondere Daten bezüglich des Einsatzes und der Mängel des Fahrzeugs, und der Speicher mit dem Bildschirm (61) verbunden ist, um die gespeicherten Daten anzuzeigen.

## Revendications

1. Véhicule, en particulier véhicule de collecte d'ordures, ayant au moins un marchepied, et un système de sécurité qui empêche le recul du véhicule lorsqu'une personne est présente sur le marchepied et qu'on cherche à faire reculer le véhicule,
**caractérisé en ce que** le système de sécurité coopère avec un système de frein agissant sur une ou plusieurs des roues du véhicule, de façon que ledit système de frein soit mis en marche lorsqu'une personne est présente sur le marchepied et qu'on cherche à faire reculer le véhicule.

2. Véhicule selon la revendication 1, **caractérisé en ce que** le système de sécurité comporte un moyen qui empêche le système de frein coopérant avec le système de sécurité d'être mis en marche par le système de sécurité lorsque la vitesse réelle du véhicule est supérieure à une vitesse prédéterminée.

3. Véhicule selon la revendication 1 ou 2, **caractérisé en ce qu'**il comporte un système de frein de service comprenant une pédale de frein qui est actionnable par le conducteur du véhicule et un dispositif pour obtenir une action de freinage en fonction de la position de la pédale de frein, tandis que le système de sécurité produit une action de freinage inférieure à l'action de freinage maximale à produire avec la pédale de frein.

4. Véhicule selon la revendication 3, **caractérisé en ce que** le système de sécurité comporte un actionneur qui vient solliciter le mécanisme de pédale de frein.

5. Véhicule selon la revendication 1 ou 2, **caractérisé en ce qu'**il comporte un système de frein à main, et le système de sécurité coopère avec le système de frein à main du véhicule, de façon que ledit système de frein à main soit mis en marche lorsqu'une personne est présente sur le marchepied.

6. Véhicule selon la revendication 5, **caractérisé en ce que** le système de sécurité comporte un actionneur qui vient solliciter le mécanisme de levier de frein à main.

7. Véhicule selon la revendication 5, **caractérisé en ce qu'**il comporte un système de frein à main avec un ou plusieurs cylindres (10) de frein à main, dans lequel un ressort (21) produit l'action de freinage à main et un agent de compression sous pression peut maintenir le ressort (21) comprimé, comportant un élément (28) d'actionnement de frein à main, actionnable par le conducteur, et un dispositif (25, LV1) pour évacuer l'agent de compression dudit au moins un cylindre de frein à main lorsque l'élément d'actionnement de frein à main est actionné ou que le système de sécurité se met en marche.

8. Véhicule selon une ou plusieurs des revendications précédentes, **caractérisé en ce qu'**il comprend un détecteur (42) de vitesse, et **en ce que** le système de sécurité coopère avec le détecteur de vitesse, et comporte également un moyen pour établir une vitesse prédéterminée, dans lequel le système de sécurité ne met pas en marche le système de frein coopérant avec celui-ci si la vitesse du véhicule détectée par le détecteur de vitesse est supérieure à la vitesse prédéterminée.

9. Véhicule selon une ou plusieurs des revendications précédentes, **caractérisé en ce que** le système de sécurité comporte un commutateur de réarmement (44) actionnable par une personne, et comporte également un moyen pour maintenir en fonctionnement un système de frein du véhicule mis en marche par le système de sécurité jusqu'à l'actionnement du commutateur de réarmement.

10. Véhicule selon la revendication 9, **caractérisé en ce que** le commutateur de réarmement (44) est disposé dans la cabine du conducteur du véhicule.

11. Véhicule selon une ou plusieurs des revendications précédentes, comportant une caméra (60), et un moyen de visualisation comportant un écran (61) disposé dans la cabine du conducteur du véhicule pour afficher des images prises par la caméra, **caractérisé en ce que** le moyen d'affichage est conçu pour afficher à l'écran des messages et/ou des avertissements, de préférence en même temps que les images prises par la caméra.

12. Véhicule selon la revendication 11, **caractérisé en ce que** le moyen de visualisation est connecté à un dispositif d'annonce sonore disposé dans la cabine du conducteur du véhicule.

13. Véhicule selon la revendication 11 ou 12, **caractérisé en ce que** le moyen de visualisation réduit l'intensité lumineuse de l'image prise par la caméra et affichée à l'écran au moment où un message est affiché à l'écran.

14. Véhicule selon une ou plusieurs des revendications précédentes 11 à 13, **caractérisé en ce qu'**il comporte une mémoire électronique (PLC) pour stocker des données concernant le véhicule, en particulier des données concernant l'utilisation du véhicule et les anomalies de fonctionnement du véhicule, et la mémoire est connectée à l'écran (61) pour afficher les données stockées.
